# EUROPEAN PATENT APPLICATION

(11) **EP 4 804 027 A1**
(43) Date of publication of application: **09.09.2026**
(21) Application number: 25200080.7
(22) Date of filing: 04.09.2025
(51) Int. Cl.: G06F 9/50, G06F 3/06, G06F 16/22

(54) **FILE INPUT/OUTPUT METHOD AND FILE INPUT/OUTPUT PROGRAM**

(30) Priority: 03.03.2025 JP 2025033265
(71) Applicant: Nomura Research Institute, Ltd., Chiyoda-ku Tokyo 100-0004 (JP)
(72) Inventor: HIROTA, Akio, Tokyo, 100-0004 (JP); KUNOU, Gouichirou, Tokyo, 100-0004 (JP)
(74) Representative: Hoffmann Eitle

(57) **Abstract**

An input method and an output method are performed by a computer including a GPU, the input method including: a first process of loading the content of a fixed-length file into a memory of the GPU; and a second process of converting a character string into a predetermined data type, and substituting the predetermined data type to a column buffer on the memory to perform deserialization, the character string having been cut out for each column from fixed-length data loaded into the memory, according to a predetermined schema, the output method including: a third process of converting column data loaded for each of the columns into the memory into a fixed-length character string according to the predetermined schema, and substituting the fixed-length character string into a writing buffer on the memory to perform serialization; and a fourth process of writing the content of the writing buffer to the fixed-length file.

## Description

### BACKGROUND OF THE INVENTION

### 1. TECHNICAL FIELD

The present invention relates to a technique for inputting/outputting a file in a computer, and in particular, a technique that is effective to be applied to a file input/output method and a file input/output program for inputting/outputting a fixed-length file.

### 2. DESCRIPTION OF THE RELATED ART

In recent years, in fields requiring an enormous amount of computation processing, such as mining in blockchain technology, development of generative artificial intelligence (AI), or machine learning, the use of a graphics processing unit (GPU) has become widespread, and has achieved results in calculation-intensive regions that are difficult to handle with a central processing unit (CPU).

An example of a technique for using the GPU for general-purpose calculation applications other than original image processing is compute unified device architecture (CUDA), which is a general-purpose parallel computing platform and programming model for GPUs that has been developed and provided by NVIDIA (registered trademark) Corporation ("CUDA Toolkit - Free Tools and Training | NVIDIA Developer", [online], NVIDIA Corporation, [searched on January 30, 2025], Internet <URL: https://developer.nvidia.com/cuda-toolkit>) (registered trademark, the same applies hereinafter).

### SUMMARY OF THE INVENTION

In an existing basic system (what is called a "legacy system") constructed of a mainframe or the like, there is a problem in coping with, for example, lack of maintenance support of operating hardware or software, and migration, such as a change in a language to be used of an application, is performed when the system is renewed, in some cases. In some legacy systems, an enormous amount of data processing, such as batch processing, is performed, and it is also important to speed up the enormous amount of data processing in migration.

The batch processing of the mainframe is data aggregation processing, and therefore it is expected to achieve speeding-up by applying CUDA or the like at the time of migration to perform GPU processing.

However, for example, in batch processing of accounting operations of a financial institution, data coordination using a fixed-length file is often used for an interface of a system or processing. However, for example, in cuda based DataFrames (cuDF, https://github.com/rapidsai/cudf), which is a library for performing data frame processing on a GPU in CUDA, there is no function of inputting/outputting the fixed-length file. Accordingly, there is no alternative but to use an existing file inputting/outputting function, and the speeding-up of processing fails to be sufficiently achieved.

In addition, such batch processing is not CPU-bound processing that is dependent on the calculation speed of the CPU, but is I/O-bound processing that is dependent on the input/output time, and therefore even if calculation processing is sped up on the GPU, speeding-up is limited in a case where it takes time to process another portion such as inputting/outputting (of the fixed-length file).

In view of the above, an object of the present invention is to provide a file input/output method and a file input/output program for performing loading of a fixed-length file into a memory on the GPU and writing to the fixed-length file from the memory on the GPU at high speed. The object described above, other objects and novel features of the present invention will become apparent from the description herein and the accompanying drawings.

An outline of a representative embodiment of the invention disclosed in the present application will be briefly described as follows.

A file input/output method according to a representative embodiment of the present invention is a file input/output method for inputting/outputting a fixed-length file to/from a computer, the file input/output method including: an input method that is performed by the computer including a GPU, the input method including: a first process of loading the content of the fixed-length file into a memory of the GPU; and a second process of converting a character string into a predetermined data type, and substituting the predetermined data type into a column buffer on the memory to perform deserialization, the character string having been cut out for each column from fixed-length data loaded into the memory, in accordance with information of a predetermined schema; and an output method that is performed by the computer, the output method including: a third process of converting column data loaded for each of the columns into the memory into a fixed-length character string in accordance with the information of the predetermined schema, and substituting the fixed-length character string into a writing buffer on the memory to perform serialization; and a fourth process of writing the content of the writing buffer to the fixed-length file.

Furthermore, the representative embodiment of the present invention can also be applied to a file input/output program for causing the computer including the GPU to perform inputting/outputting the fixed-length file.

An effect obtained by the representative embodiment of the invention disclosed in the present application will be briefly described as follows. According to the representative embodiment of the present invention, it is possible to perform loading of a fixed-length file into a memory on a GPU and writing to the fixed-length file from the memory on the GPU at high speed.

### BRIEF DESCRIPTION OF THE DRAWINGS

FIG. 1 is a diagram explaining an outline of an example of a file input/output method according to an embodiment of the present invention;
FIG. 2 is a flowchart illustrating an outline of an example of a flow of processing of a function of inputting (loading) a fixed-length file according to the embodiment of the present invention;
FIG. 3 is a flowchart illustrating an outline of an example of a flow of fixed-length file loading processing (a fixed row length) according to the embodiment of the present invention;
FIG. 4 is a flowchart illustrating an outline of an example of a flow of data loading processing according to the embodiment of the present invention;
FIG. 5 is a diagram illustrating an outline of an example of deserialization according to the embodiment of the present invention;
FIG. 6 is a diagram illustrating an outline of an example of deserialization according to the embodiment of the present invention;
FIG. 7 is a flowchart illustrating an outline of an example of a flow of fixed-length file loading processing (a variable row length) according to the embodiment of the present invention;
FIG. 8 is a flowchart illustrating an outline of an example of a flow of row length/start offset acquisition processing according to the embodiment of the present invention;
FIG. 9 is a flowchart illustrating an outline of an example of a flow of row length/start offset calculation processing (sequential blocks) according to the embodiment of the present invention;
FIG. 10 is a diagram illustrating an outline of an example of memory expansion in the row length/start offset calculation processing (sequential blocks) according to the embodiment of the present invention;
FIG. 11 is a flowchart illustrating an outline of an example of a flow of row length/start offset calculation processing (parallel blocks) according to the embodiment of the present invention;
FIG. 12 is a diagram illustrating an outline of an example of memory expansion in the row length/start offset calculation processing (parallel blocks) according to the embodiment of the present invention;
FIG. 13 is a flowchart illustrating an outline of an example of a flow of processing of a function of outputting (writing) a fixed-length file according to the embodiment of the present invention;
FIG. 14 is a flowchart illustrating an outline of an example of a flow of fixed-length character string conversion/file writing processing according to the embodiment of the present invention;
FIG. 15 is a flowchart illustrating an outline of an example of a flow of data writing processing according to the embodiment of the present invention; and
FIG. 16 is a diagram illustrating an outline of an example of memory expansion in the fixed-length character string conversion/file writing processing according to the embodiment of the present invention.

### DETAILED DESCRIPTION

Hereinafter, embodiments of the present invention will be described in detail with reference to the drawings. In all of the drawings for explaining the embodiments, the same portions are denoted by the same reference signs in principle, and the duplicate description thereof will be omitted. On the other hand, in some cases, a portion denoted by a reference sign in a description with reference to a certain drawing is not illustrated again in another drawing, but is mentioned by using the same reference sign in a description with reference to the other drawing.

### <Outline>

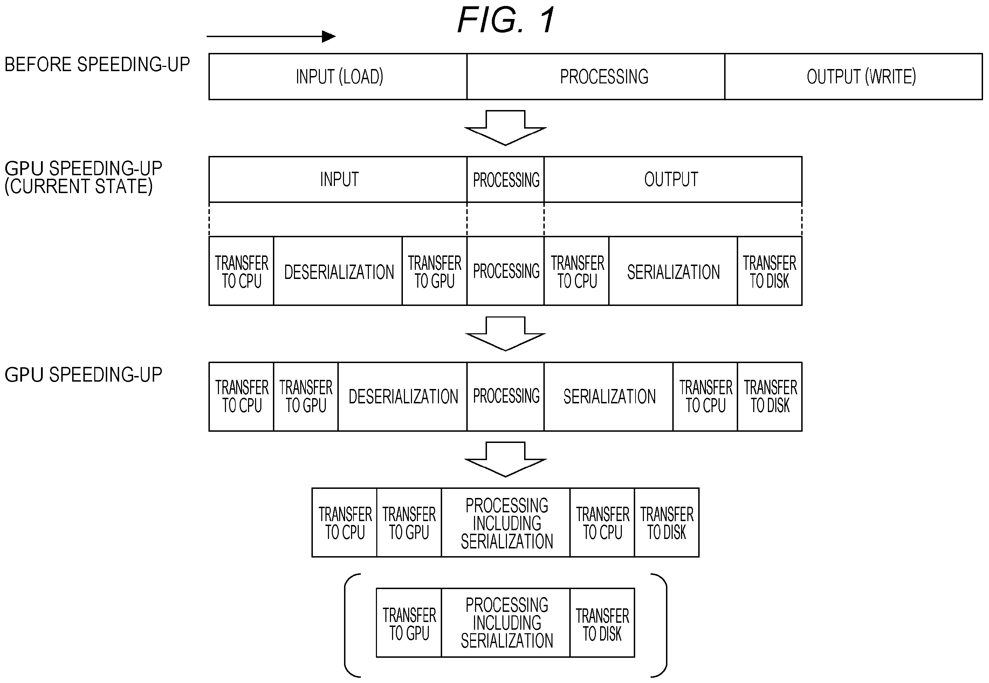

FIG. 1 is a diagram explaining an outline of an example of a file input/output method according to a first embodiment of the present invention. Here, a breakdown of the processing content of batch processing or the like of a main frame is schematically illustrated in time series from a left-hand side to a right-hand side. The upper diagram "before speeding-up " illustrates an example before speeding-up is achieved by performing GPU application, the middle diagram "GPU speeding-up (current state)" illustrates an example in a case where speeding-up has been achieved by performing GPU application by using a currently available technique or mechanism, and the lower diagram "GPU speeding-up " illustrates an example in a case where speeding-up has been achieved by performing GPU application according to the present embodiment.

As illustrated in the diagram "before speeding-up", in a case where batch processing is performed on a CPU, first, data is loaded from a file on a disk (a storage) into a memory and an "input" is performed, "processing" such as computation or calculation is performed by the CPU on the basis of the data loaded into the memory, and data of a processing result is written to the disk and an "output" is performed. As described above, batch processing is I/O bound, and therefore the ratio of "input" and "output" in the entire processing is large.

In a case where such processing is performed on the GPU by simply using a currently available technique or mechanism, as illustrated in the diagram "GPU speeding-up (current state)", in the portion "processing" in which computation or calculation is mainly performed, speeding-up is achieved due to the GPU and the processing time is significantly reduced, but in the portions "input" and "output", an effect of speeding-up is very limited. This is because most of processing in the input/output portion is not performed in computation on the GPU.

A breakdown of the processing in this input/output portion is described below, by using, as an example, the case of inputting/outputting a fixed-length file that is often used in batch processing. As illustrated, the processing is decomposed into processes of data transfer between a disk and a memory, deserialization (converting fixed-length data into byte strings), and serialization (converting pieces of data of the byte strings into the fixed-length data).

Stated another way, in an "input" process, data loaded from the disk (a local storage) is transferred to a main memory under the control of the CPU, CPU processing is performed to perform deserialization on the main memory, and the data is transferred to a memory of the GPU. Then, after GPU processing has been performed to perform "processing" such as computation or calculation in batch processing on the memory of the GPU, in an "output" process, a processing result is transferred to the main memory, CPU processing is performed to perform serialization on the main memory, and the processing result is transferred and written to the disk. As described above, deserialization/serialization processing, which is computation processing, is CPU processing in the current state, and is not performed in computation on the GPU. Therefore, even if the GPU is used to input and output the fixed-length file, the effect of speeding-up is limited.

In view of this, in the present embodiment, as illustrated in the lower diagram "GPU speeding-up", the deserialization/serialization processing is changed to GPU processing instead of CPU processing. Stated another way, in the "input" process, immediately after data loaded from the disk has been transferred to the main memory, the data is transferred to the memory of GPU, and GPU processing is performed to perform deserialization on the main memory of the GPU. Then, after "processing" such as computation or calculation in batch processing has been performed on the memory of the GPU, in the "output" process, GPU processing is performed to perform serialization on the memory of the GPU, and the data is transferred to the main memory, is transferred from the main memory to the disk, and is written to the disk.

By changing a processing procedure in this manner, the processing of deserialization/serialization (and computation or calculation in batch processing) is performed on the GPU, as illustrated, so that speeding-up can be achieved, and the processing time can be significantly reduced. Note that, by using a technique that enables direct access from a GPU to a storage such as a solid state drive (SSD) connected according to a non-volatile memory express (NVMe) protocol, such as Magnum IO GPUDirect Storage (https://developer.nvidia.com/gpudirect-storage, hereinafter referred to as "GDS" in some cases), which is software provided by NVIDIA Corporation, a direct memory access (DMA) configuration (in parentheses at the bottom in the drawing) in which data is directly transferred between the storage and the memory of the GPU without transfer between the storage and the main memory can be achieved, and further speeding-up can be achieved.

Note that the input/output method of the present embodiment can be implemented, for example, by referring to or using/extending the implementation of cuDF described above (using libcudf as a backend), as a function/library of Python (registered trademark, the same applies hereinafter) for performing each of inputting and outputting of a fixed-length file.

### <Processing Procedure (Loading)>

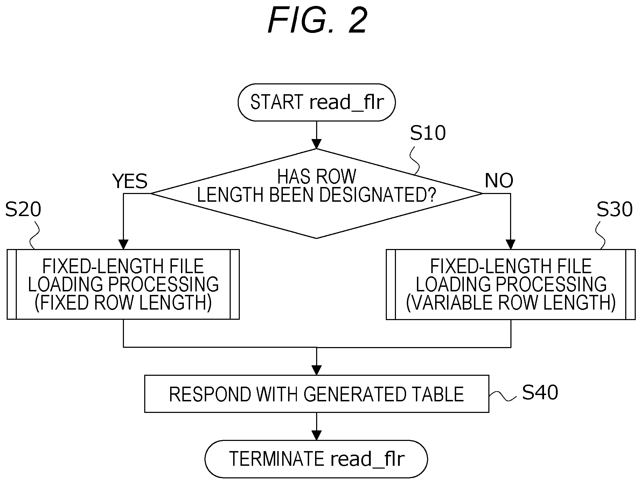

FIG. 2 is a flowchart illustrating an outline of an example of a flow of processing of a function of inputting (loading) a fixed-length file according to the embodiment of the present invention. In the present embodiment, in the function of loading the fixed-length file, it is assumed that, for example, a function named "read_flr" is newly implemented in Python.

When the read_flr function has been called and the processing has started, first, it is determined whether the row length (the length of one row) of the fixed-length file is designated in an argument (S10). In a case where the row length is designated (Yes in step S10), the fixed-length file loading processing (fixed row length) described later (S20) is performed, and a fixed-length file with the row length fixed is loaded. In contrast, in a case where the row length is not designated (No in step S10), the fixed-length file loading processing (variable row length) described later (S30) is performed, and a fixed-length file with the row length variable is loaded. Thereafter, a response is made with a table generated on the memory of the GPU as a result of any type of the fixed-length file loading processing (S40), and the read_flr function is terminated. Note that a response with the table is made in step S40, for example, by responding with a head address of the table.

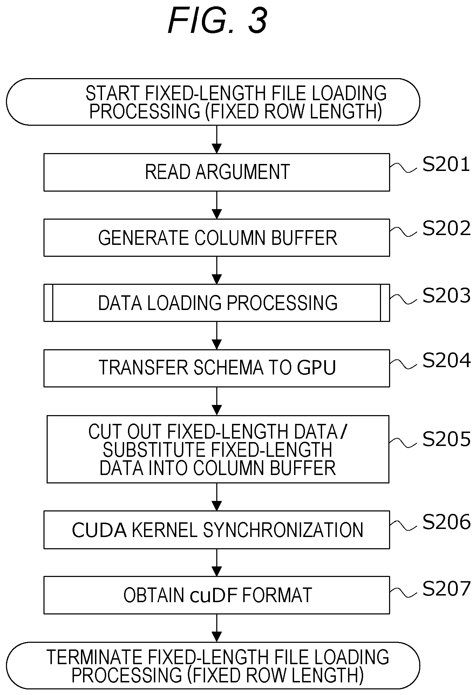

FIG. 3 is a flowchart illustrating an outline of an example of a flow of fixed-length file loading processing (a fixed row length) (step S20 of FIG. 2) according to the embodiment of the present invention. First, as preprocessing, an argument is read (S201), and a buffer (a column buffer) for holding data of each column of a fixed-length file is generated on a GPU memory (S202). Thereafter, the data loading processing described later (S203) is performed, and data of the fixed-length file is loaded from the disk or the storage into the memory on the GPU.

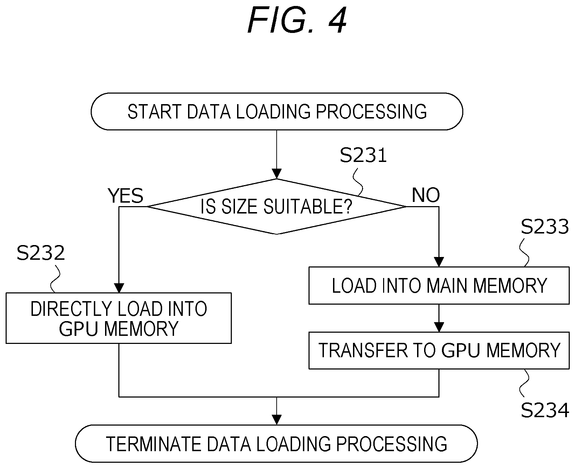

FIG. 4 is a flowchart illustrating an outline of an example of a flow of the data loading processing (step S203 of FIG. 3) according to the embodiment of the present invention. First, it is determined whether the record size of a fixed-length file to be loaded is a size that is suitable for directly loading into the memory on the GPU by performing DMA (S231). As a record size to be loaded at a time increases, the loading efficiency increases, but if the record size is too large, the latency also increases, and therefore the record size to be loaded has a suitable range (for example, 4096 to 8192 bytes).

In a case where the record size is a suitable size (Yes in step S231), the data of the fixed-length file is directly loaded into the memory on the GPU by using the GDS described above or the like (S232), and the processing is terminated. In contrast, in a case where the record size is not a suitable size (No in step S231), as a normal method, the data of the fixed-length file is loaded into the main memory (S233), and is transferred to the memory on the GPU (S234), and the data loading processing is terminated.

Returning to FIG. 3, after the data of the fixed-length file has been loaded into the memory on the GPU, a schema for cutting out the content of fixed-length data is transferred to the memory on the GPU (S204), and according to the schema, the fixed-length data on the memory is cut out, a character string of each column is converted into a predetermined data type, and is substituted into the column buffer to perform deserialization (S205). A schema to be used here is input, for example, as an argument of the read_flr function. Note that the process of step S205 can be parallelization processing in byte units by using, for example, a function of the CUDA kernel. In this case, finally, synchronization processing of the CUDA kernel is performed to synchronize the content of parallel processing in each thread (S206).

Thereafter, as post-processing, the content of the column buffer is given a column name and readable type information to be formed into a cuDF format, and the fixed-length file loading processing (a fixed row length) is terminated.

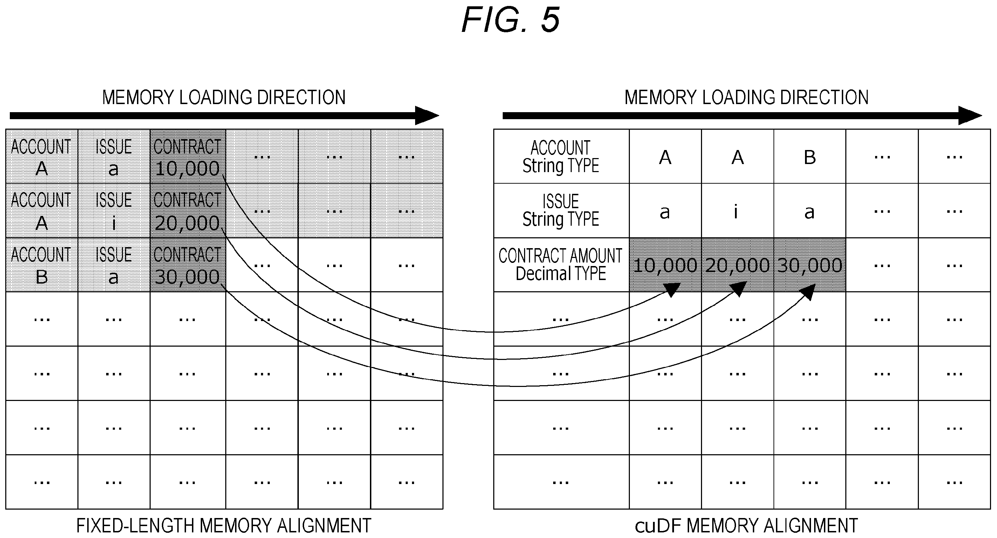

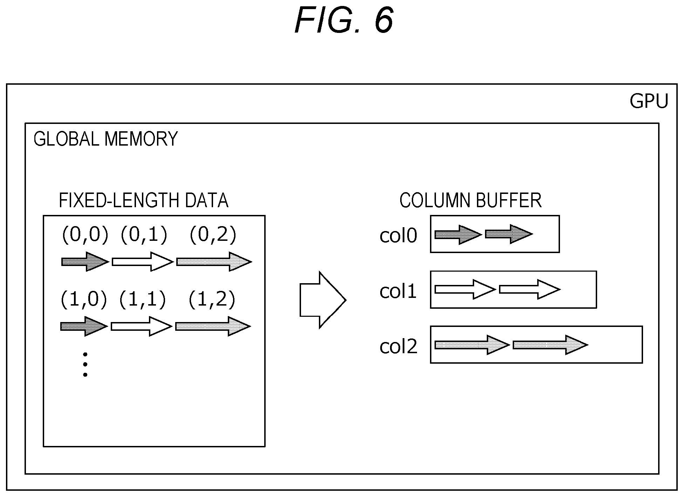

FIGS. 5 and 6 are diagrams illustrating an outline of an example of deserialization according to the embodiment of the present invention. As described above, in deserialization processing according to the present embodiment, fixed-length data on a memory is cut out, a character string of each column is converted into a predetermined data type, and then is substituted into the column buffer and is rearranged. Moreover, a column name and readable type information are given to obtain a cuDF format.

In FIG. 5, a fixed-length file in securities business is used as an example, and an example of fixed-length memory alignment is illustrated on a left-hand side, and an example of deserialized memory alignment of the cuDF format is illustrated on a right-hand side. A memory loading direction is a direction from a left-hand side to a right-hand side, and therefore, in the fixed-length memory alignment, pieces of data of columns are arranged in the memory loading direction such that "account" -> "issue" -> "contract (amount)" ->... In this case, in a case where pieces of data of an identical column (for example, "contract (amount)") are desired to be consecutively referred to in batch processing, the efficiency of memory access is poor.

When this has been rearranged and deserialized like memory alignment of the cuDF format, pieces of data of an identical column are arranged in the memory loading direction, and therefore, in a case where pieces of data of the identical column (for example, "contract amount") are desired to be consecutively referred to in batch processing, the efficiency of memory access is significantly improved. Note that, in the cuDF format, the column name and the type information of a target row are given, as illustrated as a column at a left-side end.

On the GPU, as illustrated in the example of FIG. 6, each element (i, j) of fixed-length data that has been collectively loaded from the fixed-length file into a global memory of the GPU is converted into a predetermined data type by performing parallel processing in byte units by using the function of the CUDA kernel, and is substituted into the column buffer that has been prepared for each column. For example, in the example of FIG. 6, from among respective elements (i, j), data of a column of j = 0 is substituted into "col0", data of a column of j = 1 is substituted into "col1", and data of a column of j = 2 is substituted into "col2". The column name and the type information are given to column buffers that have been generated according to such a procedure, and the cuDF format, as illustrated in the example of FIG. 5, is obtained.

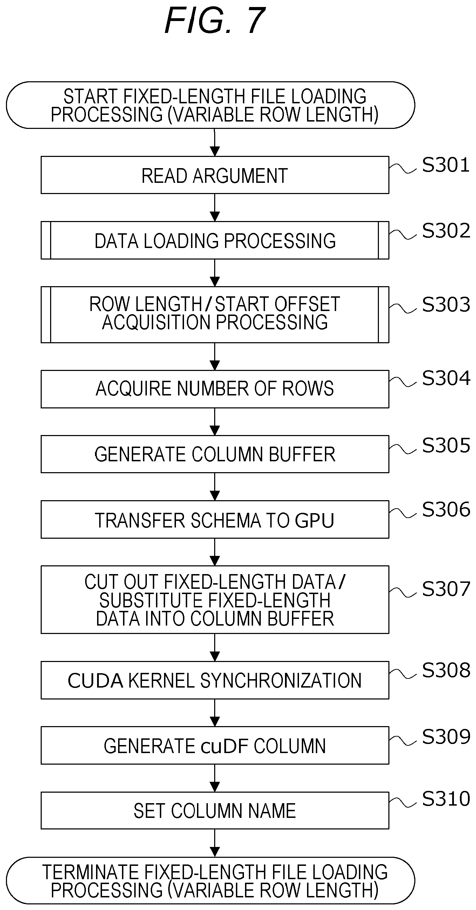

FIG. 7 is a flowchart illustrating an outline of an example of a flow of the fixed-length file loading processing (a variable row length) (step S30 of FIG. 2) according to the embodiment of the present invention. First, as preprocessing, after an argument has been read (S301), the data loading processing (S302) is performed, and data of a fixed-length file is loaded from the disk or the storage into the memory on the GPU. This data loading processing is similar to the data loading processing described above in the example of FIG. 4, and therefore a duplicate description will be omitted. Thereafter, the row length/start offset acquisition processing described later (S303) is performed on the data loaded into the memory on the GPU, and the row length of the fixed-length data and the start offset of each row are acquired.

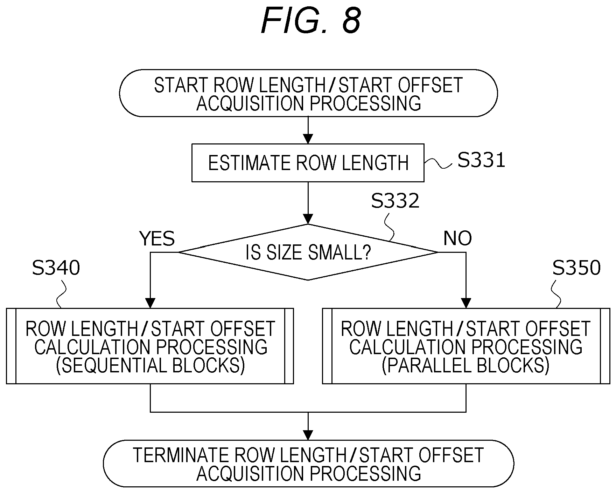

FIG. 8 is a flowchart illustrating an outline of an example of a flow of the row length/start offset acquisition processing (step S303 of FIG. 7) according to the embodiment of the present invention. First, a predetermined plurality of rows is read from the head of fixed-length data by using the function of the CUDA kernel, and a row length is calculated (estimated) (S331). Thereafter, it is determined whether the size of the fixed-length data is smaller than a predetermined size (S332). In a case where the size of the fixed-length data is smaller than the predetermined size (Yes in step S332), the row length/start offset calculation processing (sequential blocks) described later (S340) is performed, and parallel thread/sequential block processing is performed to calculate a row length and the start offset of each of the rows.

In contrast, in a case where the size of the fixed-length data is greater than or equal to the predetermined size (No in step S332), the row length/start offset calculation processing (parallel blocks) described later (S350) is performed, and parallel thread/parallel block processing is performed to calculate a row length and the start offset of each of the rows. In a case where the size of the fixed-length data is large, such as several millions of rows × several tens of columns, speeding-up can be achieved by performing a large number of parallel processes by using the function of the CUDA kernel. After these processes, the row length/start offset acquisition processing is terminated.

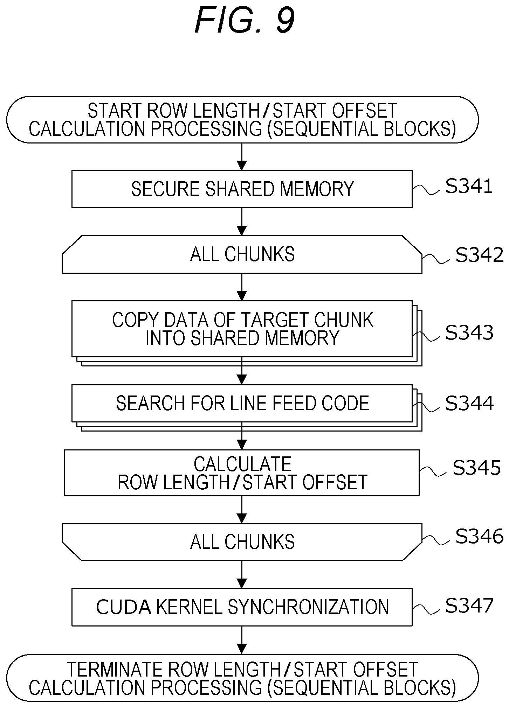

FIG. 9 is a flowchart illustrating an outline of an example of a flow of row length/start offset calculation processing (sequential blocks) (step S340 of FIG. 8) according to the embodiment of the present invention. In this processing, the function of the CUDA kernel is used to search fixed-length data for a line feed code by using 32 threads × 1 block, and a row length and the start offset of each of the rows are calculated. The block described here is a unit of grouping threads for parallel computation in the GPU, and for example, in CUDA, 32 threads are set as one block, and 32 threads cooperatively perform parallel computation in one block. Note that an amount of data processed by one block is an amount of data processed by one thread × the number of threads, and these values are adjusted in accordance with the characteristics of the GPU or an algorithm.

First, a shared memory for processing is secured on the GPU (S341), and loop processing for performing processing on fixed-length data loaded into the memory on the GPU in units of a divided chunk having a size that is easy to handle is started (S342). The fixed-length data has a fixed number of bytes per row, and can be easily accessed in row units, and therefore parallelization can be achieved such that processing is performed on each block or each chunk. Note that, in the present embodiment, processing is performed on each of the chunks obtained by dividing the fixed-length data, but processing may be performed by using, as a target, the entirety of the fixed-length data, without dividing the fixed-length data into chunks, depending on the size of the fixed-length data.

In each of the threads that cooperatively perform parallel processing, data of a chunk to be processed is copied from fixed-length data on the global memory of the GPU into a shared memory (S343), and a line feed code is searched for by viewing one byte at a time from among four bytes on the shared memory that a corresponding thread is in charge of (S344). Then, in one representative thread, a row length and a start offset are calculated from an offset value of the line feed code that has been searched for in the shared memory, and are added to a list on the global memory (S345), and the processing moves on to processing on the next chunk (S346). When the processing has been performed on all of the chunks, synchronization processing of the CUDA kernel is performed (S347), and the row length/start offset calculation processing (sequential blocks) is terminated.

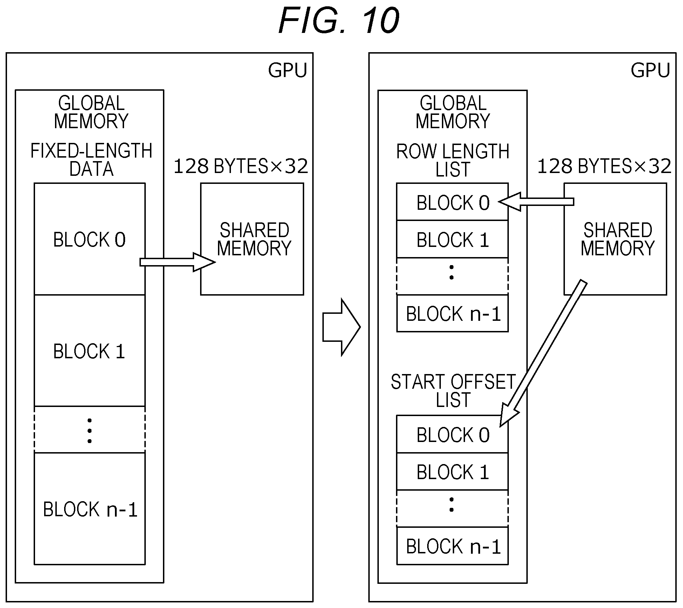

FIG. 10 is a diagram illustrating an outline of an example of memory expansion in the row length/start offset calculation processing (sequential blocks) (FIG. 9) according to the embodiment of the present invention. In sequential block processing, first, as illustrated in a left-hand side diagram, pieces of data that have been collectively loaded from a fixed-length file into the global memory of the GPU are copied into the shared memory (128 bytes ×32) in block units. Then, a line feed code is searched for on the shared memory to calculate a row length and a start offset, and as illustrated in a right-hand side diagram, the row length and the start offset are substituted from the shared memory to a row length list and a start offset list on the global memory, respectively. This processing is sequentially repeated in block units.

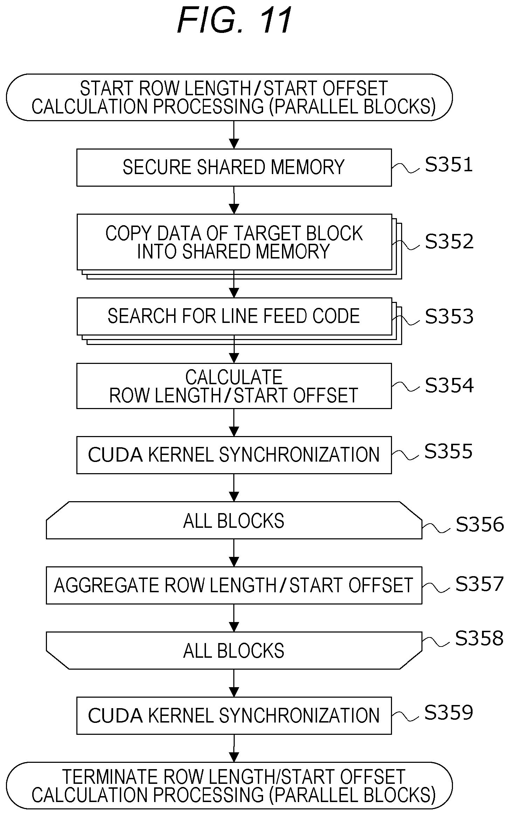

FIG. 11 is a flowchart illustrating an outline of an example of a flow of the row length/start offset calculation processing (parallel blocks) (step S350 of FIG. 8) according to the embodiment of the present invention. In this processing, in contrast to the sequential block processing described above with reference to FIG. 9, the function of the CUDA kernel is used to search for a line feed code in each of the blocks of the fixed-length data by using 32 threads × N blocks, and a row length and the start offset of each of the rows are calculated. Moreover, the row lengths and the start offsets that have been calculated in parallel processing on the respective blocks by using 1 thread × 1 block are aggregated to form respective lists.

First, a shared memory for processing is secured on the GPU (S351). 32 threads × N blocks are used, parallel processing is performed in N blocks to search for a line feed code in each of the blocks, and a row length and a start offset are calculated. Stated another way, in each of the threads of each of the blocks, data of block i to be processed is copied from the fixed-length data on the global memory on the GPU into the shared memory (S352), and from among 4 bytes of the shared memory that a corresponding thread is in charge of × 33 (one offset is added to 32 threads to obtain 33 threads (33 is a prime number), and therefore a conflict is avoided in access of each of the threads to a memory bank), one byte at a time is viewed to search for a line feed code (S353). Then, in one representative thread, a row length and a start offset are calculated from an offset value of the line feed code that has been searched for in the shared memory, and are added to respective lists on the global memory (S354), and synchronization processing of the CUDA kernel is performed (S355).

Thereafter, the row lengths and the start offsets that have been calculated in the respective blocks by using 1 thread × 1 block are aggregated to form respective lists. Stated another way, loop processing for performing processing in block units is started (S356), in one target thread, the row length and the start offset of a target block on the global memory are aggregated, and are added to respective lists on the global memory (S357), and the processing moves on to processing on the next block (S358). When the processing has been performed on all of the blocks, synchronization processing of the CUDA kernel is performed (S359), and the row length/start offset calculation processing (parallel blocks) is terminated.

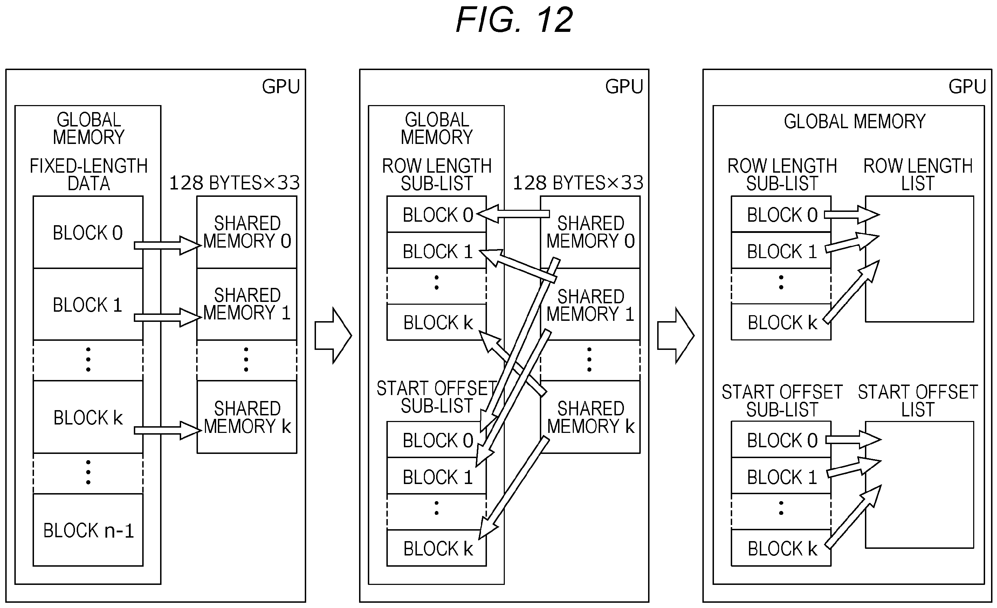

FIG. 12 is a diagram illustrating an outline of an example of memory expansion in the row length/start offset calculation processing (parallel blocks) (FIG. 11) according to the embodiment of the present invention. In parallel block processing, first, as illustrated in a left-hand side diagram, parallel processing is performed on each of the blocks, and pieces of data that have been collectively loaded from a fixed-length file into the global memory of the GPU are copied into the shared memory (128 bytes ×33) in block units. Then, a line feed code is searched for on the shared memory to calculate a row length and a start offset. As illustrated in a center diagram, the row length and the start offset are substituted from the shared memory to sub-lists respectively holding the row length and the start offset on the global memory. Thereafter, as illustrated in a right-hand side diagram, the respective sub-lists of the row length and the start offset are aggregated into one row length list and one start offset list.

### <Processing Procedure (Writing)>

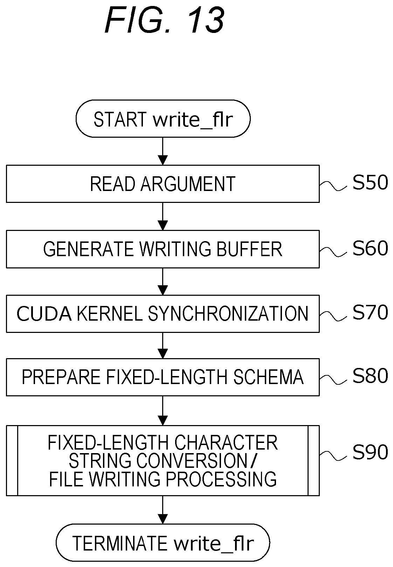

FIG. 13 is a flowchart illustrating an outline of an example of a flow of processing of a function of outputting (writing) a fixed-length file according to the embodiment of the present invention. In the present embodiment, in the function of writing the fixed-length file, it is assumed that, for example, a function named "write_fir" is newly implemented in Python.

When the write_fir function has been called and the processing has started, first, an argument is read (S50), and a buffer for writing processing is generated in a memory on the GPU (S60). In the present embodiment, two identical writing buffers are generated and double buffering is performed to alternately perform processing, and therefore the idle time is reduced and the processing efficiency is improved. However, the present invention is not particularly limited to such a configuration. Note that the writing buffer has been initialized by substituting a line feed code into the entirety of the writing buffer by using the function of the CUDA kernel. Thereafter, synchronization processing of the CUDA kernel is performed (S70).

Thereafter, a schema for writing the content of fixed-length data to a file is prepared (S80), the fixed-length character string conversion/file writing processing described later (S90) is performed, column data expanded in the memory on the GPU is written to the file while being converted into a fixed-length character string according to the schema, and the write_fir function is terminated. Note that the schema described here can be generated from, for example, information of column data of the cuDF format serving as a writing target.

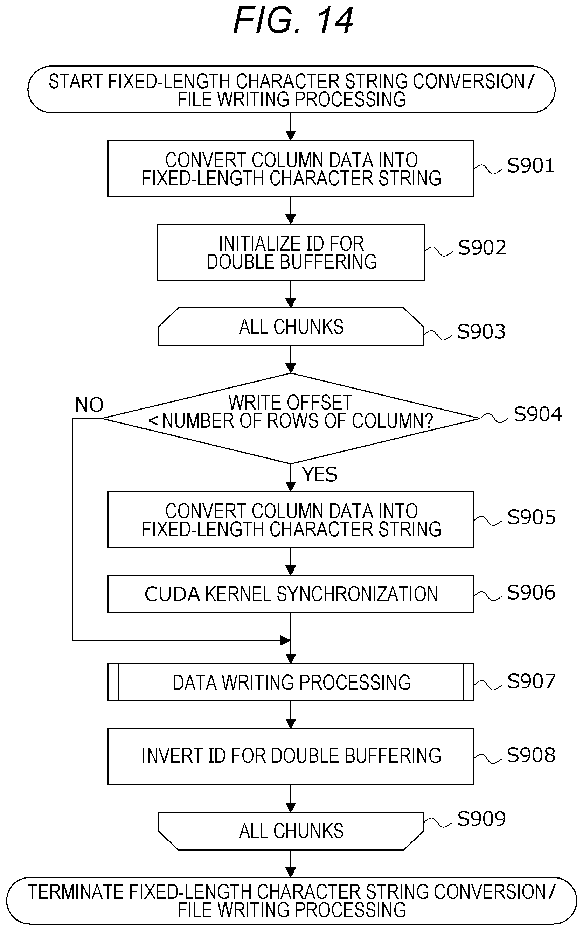

FIG. 14 is a flowchart illustrating an outline of an example of a flow of the fixed-length character string conversion/file writing processing (step S90 of FIG. 13) according to the embodiment of the present invention. Here, double buffering is used to write column data to a file while converting the column data into a fixed-length character string according to the schema in units of a chunk having a predetermined size.

First, the content of column data is converted (serialized) into a fixed-length character string by using the function of the CUDA kernel (S901). Thereafter, an ID for double buffering (an ID indicating which processing of fixed-length character string conversion using the CUDA kernel and writing to a file will be performed) is initialized (S902).

Thereafter, loop processing for performing processing on each chunk of the column data is started (S903). In the loop processing, first, it is determined whether the offset of a write row is smaller than the number of rows of the column (S904). In a case where the offset is smaller than the number of rows of the column (Yes in step S904), the content of the column data is converted (serialized) into a fixed-length character string by using the function of the CUDA kernel (S905), and synchronization processing of the CUDA kernel is performed (S906).

Thereafter, including a case where the offset of the write row is greater than or equal to the number of rows of the column (No in step S904), the data writing processing described later (S907) is performed to write data of a target chunk to a file. Thereafter, the ID for double buffering is inverted in such a way that processing on the buffer for writing processing is switched (S908), and the processing moves on to processing on the next chunk (S909). When the processing has been performed on all of the chunks, the fixed-length character string conversion/file writing processing is terminated.

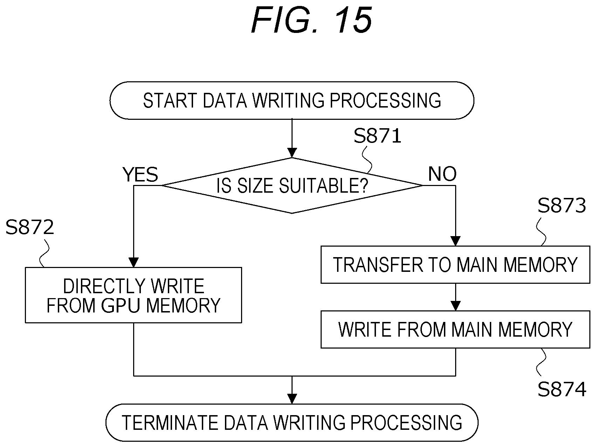

FIG. 15 is a flowchart illustrating an outline of an example of a flow of the data writing processing (step S907 of FIG. 14) according to the embodiment of the present invention. First, it is determined whether the record size of fixed-length data serving as a writing target is a size that is suitable for directly writing from the memory on the GPU by performing DMA (S871). Similarly to the case of loading, as a record size to be written at a time increases, the writing efficiency increases, but if the record size is too large, the latency also increases, and therefore the record size to be written has a suitable range.

In a case where the record size is a suitable size (Yes in step S871), fixed-length data of the memory on the GPU is directly written to a file by using the GDS described above or the like (S872), and the processing is terminated. In contrast, in a case where the record size is not a suitable size (No in step S871), as a normal method, the fixed-length data of the memory on the GPU is transferred to the main memory (S873), and is written to the fixed-length file by performing CPU processing (S874), and the data writing processing is terminated.

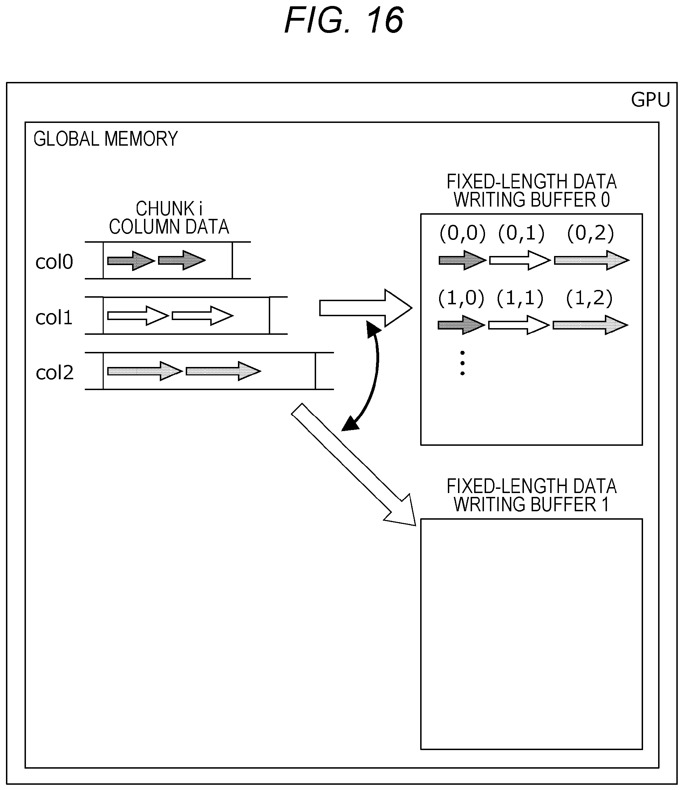

FIG. 16 is a diagram illustrating an outline of an example of memory expansion in the fixed-length character string conversion/file writing processing (FIG. 14) according to the embodiment of the present invention. As illustrated, each element (i, j) of column data expanded in the global memory on the GPU is converted into a character string by performing parallel processing by using the function of the CUDA kernel, and is substituted into the writing buffer. The drawing illustrates that column data of chunk i is substituted into writing buffer 0.

In double buffering processing, the content of a writing buffer in which the processing has been completed is sequentially (alternately) written to the fixed-length file. In the example of FIG. 16, for example, when the data of chunk i has been converted into a fixed-length character string, and has been substituted into writing buffer 0, the content of writing buffer 0 (the fixed-length data of chunk i) is written to the file. Meanwhile, for writing buffer 1, the data of the next chunk (i + 1) is converted into a fixed-length character string, and is substituted. Then, when the content of writing buffer 0 (the fixed-length data of chunk i) has been written to the file, the content of writing buffer 1 (the fixed-length data of chunk (i + 1)) is written to the file. As described above, processing for writing data of one writing buffer to a fixed-length file while converting the data of another writing buffer into a fixed-length character string is alternately repeated, and therefore the processing efficiency is improved.

As described above, according to the data input/output method according to an embodiment of the present invention, the processing of deserialization/serialization in input/output of a fixed-length file is performed as GPU processing instead of CPU processing. Stated another way, in the input process, immediately after data loaded from a disk has been transferred to a main memory, the data is transferred to a memory of the GPU (or is directly transferred to the memory of the GPU), and GPU processing is performed on the memory of the GPU to perform deserialization. Then, after processing, such as computation or calculation, in batch processing or the like has been performed on the memory of the GPU, in the output process, GPU processing is performed on the memory of the GPU to perform serialization, and the data is transferred to the main memory, is transferred from the main memory to the disk (or is directly transferred from the memory of the GPU to the disk), and is written. As a result, the input/output of the fixed-length file can be sped up by performing the GPU processing, and the processing time can be significantly reduced.

The invention made by the present inventor has been specifically described above on the basis of the embodiment, but the present invention is not limited to the embodiment described above, and it goes without saying that various changes can be made without departing from the gist of the present invention. The embodiment described above has been described in detail to make the present invention easily understandable, and the present invention is not necessarily limited to an embodiment including all of the configurations described above. Furthermore, some of the configurations in the embodiment described above can be added with other configurations, can be deleted, or can be replaced with other configurations.

Some or all of the configurations, functions, processing units, processing procedures, or the like described above may be implemented by hardware, for example, by being designed as integrated circuits. Alternatively, the configurations, functions, or the like described above may be implemented by software by a processor interpreting and executing programs for achieving respective functions. Information such as programs, tables, or files for achieving the respective functions can be stored in a recording device such as a memory, a hard disk, or an SSD, or in a recording medium such as an IC card, an SD card, or a DVD.

Furthermore, each of the drawings described above illustrates control lines or information lines that are considered to be necessary for description, and does not necessarily illustrate all of the control lines or information lines in implementation. It may be considered that almost all of the configurations are mutually connected in practice.

The present invention is applicable to a file input/output method and a file input/output program for inputting/outputting a fixed-length file.

## Claims

1. A file input/output method for inputting/outputting a fixed-length file to/from a computer, the file input/output method comprising:
an input method that is performed by the computer including a graphics processing unit (GPU), the input method including:
a first process of loading content of the fixed-length file into a memory of the GPU; and
a second process of converting a character string into a predetermined data type, and substituting the predetermined data type into a column buffer on the memory to perform deserialization, the character string having been cut out for each column from fixed-length data loaded into the memory, in accordance with information of a predetermined schema; and
an output method that is performed by the computer, the output method including:
a third process of converting column data loaded for each of the columns into the memory into a fixed-length character string in accordance with the information of the predetermined schema, and substituting the fixed-length character string into a writing buffer on the memory to perform serialization; and
a fourth process of writing content of the writing buffer to the fixed-length file.

2. The file input/output method according to claim 1, wherein
in the first process, the content of the fixed-length file is loaded into a main memory of the computer, and the fixed-length data loaded into the main memory is transferred to the memory, and
in the fourth process, the content of the writing buffer is transferred onto the main memory, and data transferred to the main memory is written to the fixed-length file.

3. The file input/output method according to claim 1, wherein
two of the writing buffers are set on the memory, and double buffering is performed to alternately perform the third process and the fourth process in each of the two of the writing buffers.

4. A file input/output program for inputting/outputting a fixed-length file to/from a computer, the file input/output program comprising:
an input program that causes the computer including a graphics processing unit (GPU) to perform:
a first process of loading content of the fixed-length file into a memory of the GPU; and
a second process of converting a character string into a predetermined data type, and substituting the predetermined data type into a column buffer on the memory to perform deserialization, the character string having been cut out for each column from fixed-length data loaded into the memory, in accordance with information of a predetermined schema; and
an output program that causes the computer to perform:
a third process of converting column data loaded for each of the columns into the memory into a fixed-length character string in accordance with the information of the predetermined schema, and substituting the fixed-length character string into a writing buffer on the memory to perform serialization; and
a fourth process of writing content of the writing buffer to the fixed-length file.

5. The file input/output program according to claim 4, wherein
in the first process, the content of the fixed-length file is loaded into a main memory of the computer, and the fixed-length data loaded into the main memory is transferred to the memory, and
in the fourth process, the content of the writing buffer is transferred onto the main memory, and data transferred to the main memory is written to the fixed-length file.

6. The file input/output program according to claim 4, wherein
the computer sets two of the writing buffers on the memory, and performs double buffering to alternately perform the third process and the fourth process in each of the two of the writing buffers.
